# EUROPÄISCHE PATENTSCHRIFT

(11) **EP 3 245 063 B1**
(45) Veröffentlichungstag und Bekanntmachung des Hinweises auf die Patenterteilung: **20.07.2022**
(21) Anmeldenummer: 16712289.4
(22) Anmeldetag: 15.03.2016
(51) Int. Cl.: B32B 19/00, C08G 65/00, H01B 3/04, H01B 3/40, H02K 3/30, H02K 3/493

(54) **BANDKLEBER FÜR EIN ISOLIERBAND IN EINEM ISOLATIONSSYSTEM UND ISOLATIONSSYSTEM**
TAPE ADHESIVE FOR AN INSULATING TAPE IN AN INSULATION SYSTEM AND INSULATION SYSTEM
COLLE POUR BANDE ISOLANTE DANS UN SYSTÈME D'ISOLATION ET SYSTÈME D'ISOLATION

(30) Priorität: 24.03.2015 DE 102015205328
(43) Veröffentlichungstag der Anmeldung: 22.11.2017
(73) Patentinhaber: Siemens Aktiengesellschaft, 80333 München (DE)
(72) Erfinder: HUBER, Jürgen, 91058 Erlangen (DE); OLBRICH, Irene, 13581 Berlin (DE); SCHIRM, Dieter, 96149 Breitengüßbach (DE); ÜBLER, Matthias, 92289 Ursensollen (DE)
(86) Internationale Anmeldenummer: PCT/EP2016/055557
(87) Internationale Veröffentlichungsnummer: WO 2016/150764

(56) Entgegenhaltungen:
- WO-A1-90/00802
- WO-A1-2016/050450
- US-A- 3 556 925

## Beschreibung

Die Erfindung betrifft einen Bandkleber für ein Isolierband in einem Isolationssystem und ein Isolationssystem, insbesondere ein Isolationssystem für elektrische Maschinen im Hochspannungsbereich ab 1kV mit einem anhydridfreien Imprägnierharz z.B. ein Imprägnierharz mit Oxiranfunktionalitäten.

Elektrische Maschinen enthalten in der Vielzahl der Längsnuten des Ständerblechpakets speziell geartete Spulenwicklungen, i.d.R. aus Kupfer, die durch zeitlich selektive Bestromungen ein ringsum propagierendes Magnetfeld erzeugen, welches wiederrum den in der Bohrung des Ständers aufgehängten und frei drehenden Rotor, welcher z.B. aufgrund einer Vielzahl an applizierten Permanentmagneten auf das induzierte Magnetfeld in Form von erzwungener Rotation reagieren kann, antreibt und so elektrische Energie in Bewegungsenergie umgewandelt werden kann. Das Blechpaket liegt dabei auf Erdpotential, die Spulen hingegen auf hohem Kilovoltpotential. Die in den Statornuten eingepassten Spulen müssen demnach gegen Masse elektrisch isoliert werden.

Dazu wird eine jede Spule mit einem speziellen Glimmerpapierbasiertem Band (Glimmerband) mehrfach und definiert-überlappt isoliert. Glimmer wird verwendet, da es als plättchenförmiger, anorganischer fester Isolationswerkstoff die elektrische Erosion unter elektrischen Teilentladungsszenarien wirkungsvoll und lange zu retardieren vermag und eine gute chemische und thermische Beständigkeit aufweist. Glimmerbänder bestehen beispielsweise aus Glimmerpapier und einem oder mehreren Trägern (z.B. Folie), die über einen Bandkleber miteinander verbunden sind. Glimmerbänder werden bevorzugt gegenüber Glimmerpapier eingesetzt da Glimmerpapier allein nicht die für einen Isolationsprozess nötige mechanische Festigkeit aufweist.

Je nach Anwendung können dem Bandkleber weitere Additive zugegeben sein, z.B. Beschleuniger, die katalytisch auf die thermische Härtung eines im Anschluss extern beaufschlagten Imprägniermittels wirken: nachdem die mit Glimmerband isolierten Spulen in die Ständerblechpakete eingepasst und elektrisch geschaltet sind, wird zur Vermeidung von Teilentladungen während des späteren Betriebs die Luft in den Hohlräumen der Wicklungen und insbesondere in den Nutspalten des Ständerblechpakets durch das Imprägniermittel verdrängt. Da dieser Abstand von bestromter, isolierter Spule zum Blechpaket in der Regel so klein wie möglich gehalten wird, sind dort Feldstärken von mehreren kV/mm keine Seltenheit. Dementsprechend muss das Isolationsmaterial gewählt werden.

Thermisch härtbare Epoxidharz/Anhydrid-Gemische haben sich als zuverlässig für diesen Zwecke herausgestellt. In dem als Vacuum-Pressure-Impregnation dem Fachmann bekannten "VPI-Verfahren" werden die aus ihren Einzelteilen zusammengesetzten Statoren der elektrischen Maschinen mit den eingepassten und glimmerbandisolierten Spulen im Ganzen nach dem Stand der Technik mit einer dünnflüssigen Epoxidharz-Phthalsäureanhydrid-Formulierung in einer Vakuumkammer geflutet und anschließend unter Druckbeaufschlagung imprägniert. Abhängig vom Zusammenspiel zwischen Beschleuniger im Glimmerband und Imprägniermittel kann es bereits während der Imprägnierphase zu einer Gelierung des in die Glimmerbandisolation eingedrungenen Imprägniermittels kommen.

Da Phthalsäureanhydride jedoch atemwegs-sensibilisierende Substanzen sind, ist die Herstellung gänzlich anhydridfreier Isolationssysteme, wie Imprägnierharze mit Oxiranfunktionalitäten, die beispielsweise aus der DE 102014219844.5 bekannt sind, von großem Interesse.

Die Endaushärtung erfolgt im Regelfall unter Normaldruck im Industrieofen. Dabei kommt dem Beschleuniger im Glimmerband (Bandbeschleuniger) die Aufgabe zu, das applizierte Imprägniermittel, bislang immer noch Epoxidharz mit Phthalsäureanhydrid, in einer gewünschten Zeit bei einer definierten Temperatur zu gelieren und zu härten. Als industrieller Standard hat sich als Imprägniermittel eine Mischung aus destilliertem Bisphenol-A-Diglycidylether und Methylhexahydrophthalsäureanhydrid etabliert, diese sehr dünnflüssige Formulierung, die in Abwesenheit von Beschleunigersubstanzen eine gewünscht lange Lagerstabilität bei Imprägniertemperatur aufweist (z.B. Verdopplung der Anfangsviskosität erst nach mehreren Wochen), jedoch bei Anwesenheit von katalytisch wirksamen Spezies rasch zum Hochpolymeren reagiert. Da das Glimmerband jedoch ebenso eine hinreichend lange Lagerstabilität aufweisen muss, sollten Bandkleber und Bandbeschleuniger zueinander inert sein. Idealerweise reagieren alle drei Komponenten (Bandkleber, Bandbeschleuniger und Imprägniermittel) erst im Moment des Zusammentreffens während des VPI-Prozesses miteinander. So erreicht man bestmögliche Vernetzung sowie Anbindung, Kompatibilität und schlussendlich Fehler- und Lunkerfreiheit und damit lange elektrische Lebensdauern der beim Härten im Abschluss entstehenden "Hauptisolation" der elektrischen Maschine.

Da das Imprägniermittel ("Tränkharz") bisher noch ein Epoxidharz-Phthalsäureanhydridgemisch ist, ist zur Härtungsinitiierung oftmals ein Aminderivat das Mittel der Wahl. So ist der Bandbeschleuniger häufig ein substituiertes Amin z.B. auf Basis eines Piperazins o.ä., weil durch diese Spezies verhältnismäßig hohe Glasübergangstemperaturen in Epoxidharz/Anhydridmischungen bei thermischer Härtung eingestellt werden können. Weiterhin ist Zinknaphthenat ein etablierter Bandbeschleuniger.

Da der Bandkleber für eine optimale Kompatibilität bzw. Reaktion mit dem Tränkharz im Idealfall ebenfalls oxiranfunktional ist, ergibt sich die Problematik der Lagerstabilität im Glimmerband. Insbesondere bei der Verwendung anhydridfreier Imprägnierharze werden Beschleuniger eingesetzt, die anionische und/oder kationische Polymerisationsmechanismen initiieren und sich deshalb gegenüber den herkömmlichen Bandklebern als weniger inert zeigen als gegenüber einem Beschleuniger für eine säureanhydrid-Reaktionsharzmischung wie sie nach dem Stand der Technik üblich ist.

Entsprechend ist es Aufgabe der vorliegenden Erfindung, einen Bandkleber für ein anhydridfreies Imprägnierharz mit einem entsprechend reaktiven Beschleuniger zu finden, der ansonsten ein ähnliches Anforderungsprofil erfüllt wie die bisher eingesetzten Bandkleber in Isolationssystemen mit säureanhydridhaltigem Imprägniermittel.

Diese Aufgabe wird durch den Gegenstand der vorliegenden Erfindung, wie er in den Ansprüchen, der Beschreibung und den Figuren offenbart wird, gelöst.

Gegenstand der vorliegenden Erfindung ist ein Bandkleber für ein Isolationssystem, eine dynamische Viskosität von 1 - 100 Pa*s bei Imprägniertemperatur aufweisend, der ein Additionsprodukt aus einem Bisphenol, Diol, Triol und/oder höherem Alkohol (nachfolgend als Segment "**A(OH)ₙ**" bezeichnet, mit Cyclohexenoxid oder einem Cyclohexenoxidderivat, nachfolgend als Segment "**Cy**" bezeichnet, umfasst. Gegenstand der Erfindung ist außerdem ein Isolationssystem, einen festen Isolationswerkstoff, ein anhydridfreies Imprägnierharz, einen Beschleuniger und einen Bandkleber umfassend.

Nach einer vorteilhaften Ausführungsform sind als Bandkleber Verbindungen geeignet, die gemäß einer chemischen Oxiran-Hydroxy-Reaktion unter Schaffung neuer vicinalständiger Hydroxygruppen aus Cyclohexenoxid und/oder monoepoxidischen Cyclohexenoxidderivaten und Diolen, Triolen und/oder höheren Alkoholen, Alkoholderivaten, Estern aliphatischer, cycloaliphatischer und/oder aromatischer Natur sowie aromatischen und cycloaliphatischen Bisphenolen **A(OH)ₙ**, (**A** entspricht dabei nach der Lewissummenformelnomenklatur den formal um **n** OH-Gruppen dezimierten Summenformelrest) mit **n**=2 bis 20, reagieren und nach vakuum- und temperaturvermittelter Abdestillation unreagierten Cyclohexenoxids bzw. Cyclohexenoxidderivats eine Viskosität von 1-100 Pa·s bei Imprägniertemperatur besitzen.

Als **A(OH)ₙ** eignen sich beispielsweise:
- Mono-Ethylenglycol (C₂H₄)(OH)₂, Butandiole (C₄H₈)(OH)₂, Butendiole (C₄H₆)(OH)₂, Butindiol (C₄H₄)(OH)₂, Polyethylenglykole H(OC₂H₄)ₓ(OH)₂ mit x=1 bis 5000, Propylenglykol (C₃H₆)(OH)₂, Polypropylenglykole H(OC₃H₆)ₓ(OH)₂ mit x=1 bis 5000, Diethylenglykol (C₂H₈O)(OH)₂, Propandiole (C₃H₆)(OH)₂, Neopentylglycol (C₅H₁₀)(OH)₂, Cyclopentandiole (C₅H₈)(OH)₂, Cyclopentendiole (C₅H₆)(OH)₂, Glycerin (C₃H₅)(OH)₃, Pentandiole (C₅H₁₀)(OH)₂, Pentaerythritol (C₅H₈)(OH)₄, Hexandiole (C₆H₁₂)(OH)₂, Hexylenglykole (C₆H₁₂)(OH)₂, Heptandiole (C₇H₁₄)(OH)₂, Octandiole (C₈H₁₆)(OH)₂, Polycaprolactondiole, Polycaprolactontriole, Hydrochinon (C₆H₄)(OH)₂, Resorcinol (C₆H₄)(OH)₂, (Pyro)Catechol (C₆H₄)(OH)₂, Rucinol (C₁₀H₁₂)(OH)₂, Triethylenglycol (C₆H₁₂)(OH)₂
- vollaromatisches, teilhydriertes und/oder vollhydriertes Bisphenol-A (C₁₅H₁₄)(OH)₂, (C₁₅H₂₈)(OH)₂, Bisphenol-F (C₁₃H₁₀)(OH)₂, Bisphenol-S (C₁₂H₈O₂S)(OH)₂
- Tricyclodecandimethanol (C₁₂H₁₈)(OH)₂, Glycerincarbonat (C₄H₅)(OH)₁

Nach einer bevorzugten Ausführungsform hat der Bandkleber eine Viskosität von 5 - 20 Pa*s bei 70°C.

Die Auswahl der als Bandkleber geeigneten Verbindungen wird hinsichtlich seiner Reaktivität zu anionisch- und/oder kationisch-härtenden Beschleunigersubstanzen für herkömmliche 1,2-Diepoxide, insbesondere des Bisphenol-A-Diglycidylether und/oder Bisphenol-F-Diglycidylethers mit Repetiereinheiten n ≥ 0 getroffen. Allgemeine Erkenntnis ist dabei, dass der verwendete Bandkleber bevorzugt oxirangruppenfrei ist. Anionische Polymerisation initiierende Beschleuniger mit relativ hoher Vakuumfestigkeit, wie beispielsweise (Tri-N-Methylpiperazinderivat des TMPTs), liefern mit oxirangruppenfreien Bandklebern die geforderte Lagerstabilität des Glimmerisolationsbandes.

Da Cyclohexenoxid und/oder ein am aliphatischen Zyklus derivatisiertes Cyclohexenoxid, nur jeweils eine Oxirangruppe besitzt, liefert die Reaktion dieser Epoxidgruppen mit den Hydroxylgruppen des Segments **A(OH)ₙ** keine später reaktionsbefähigten cycloaliphatischen Oxirangruppen, die mit anionischen und/oder kationisch-vermittelnden Beschleunigersubstanzen im Isolationsband reagieren können.

Die Synthese der erfindungsgemäßen Bandklebersubstanzen gelingt beispielsweise durch Umsetzung des jeweiligen A(OH)ₙ-Edukts mit Cyclohexenoxid und/oder einem Cyclohexenoxidderivat.

Da die Reaktion von Oxiranen und Hydroxylen chemischmechanistisch neue Hydroxylgruppen während der Oxiran/Hydroxylgruppen-Reaktion im Zielmolekül generiert, sind diese neuartigen Bandkleberderivate zudem auch befähigt, in ionisch-härtenden, insbesondere phthalsäureanhydridfreien Formulierungen einzupolymerisieren.

Demnach eignen sich die neuartigen Bandkleber ebenso auch als Träger oder Verkapselungen für ionisch-wirkende Beschleunigertypen, wie etwa Hexafluoroantimonate, Tetrafluoroborate und Hexaflurorophosphate und/oder Sulphoniumderivate als Vertreter sog. Supersäuren bzw. Supersäuresalze, aber auch für vakuumstabilere Alkylmethylimidazole, insbesondere des 1-Decyl-2-Methylimidazols.

Diese zeigen mit hydroxylgruppenhaltigen Verbindungen auch bei erhöhter Temperatur um 70°C keine oder nur marginale Katalyse der bimolekularen Hydroxyl-Veretherungsreaktion.

Zur Verdeutlichung der Zielstrukturen werden im Folgenden einige Ausführungsbeispiele der Bandkleberverbindungen, die einzeln oder als Gemisch einsetzbar sind, in Strukturformeln vorgestellt:

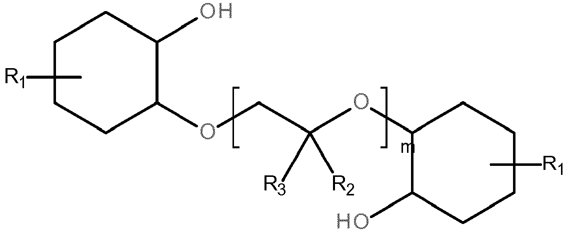

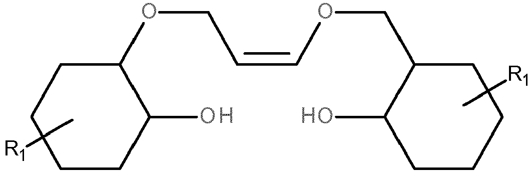

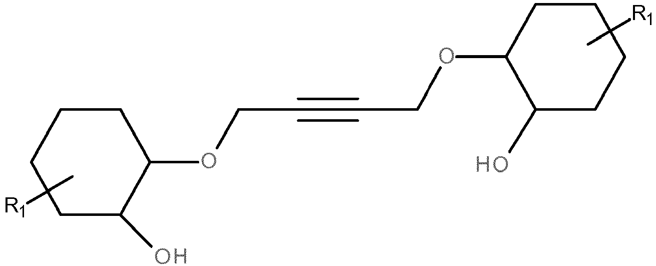

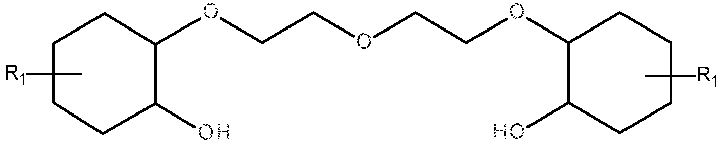

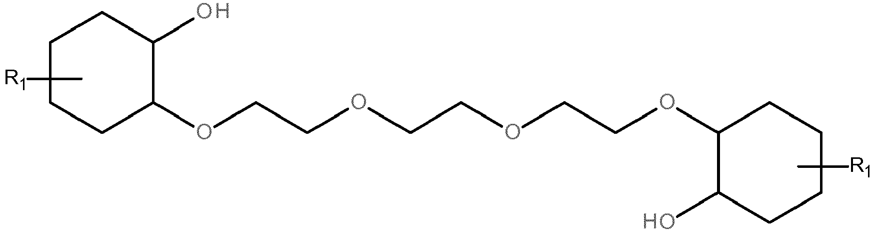

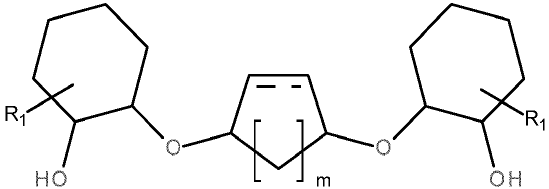

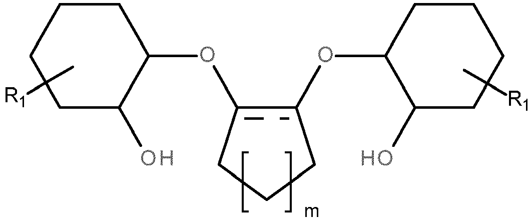

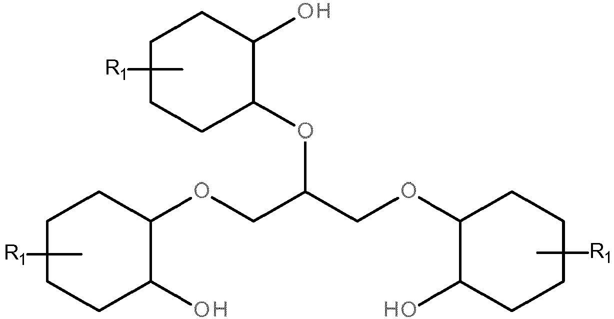

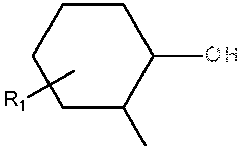

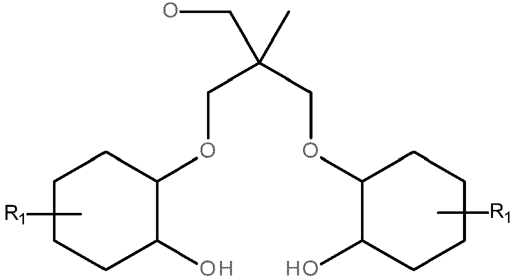

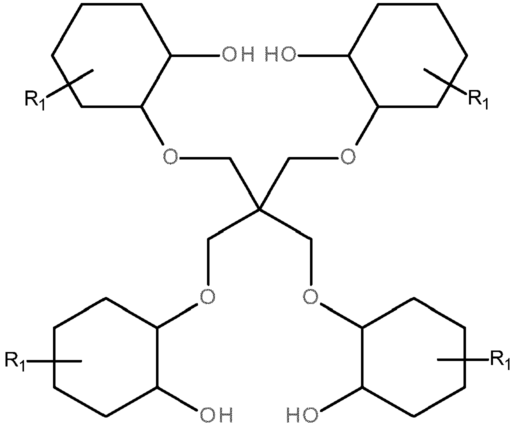

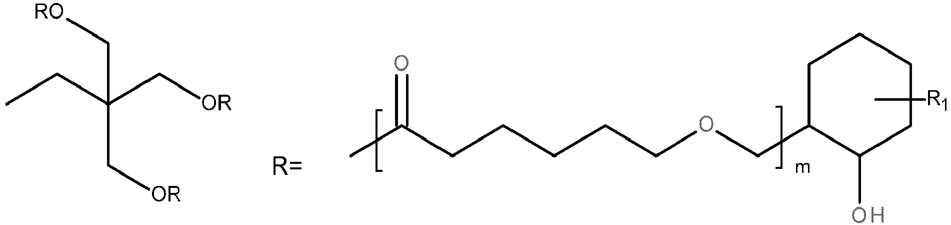

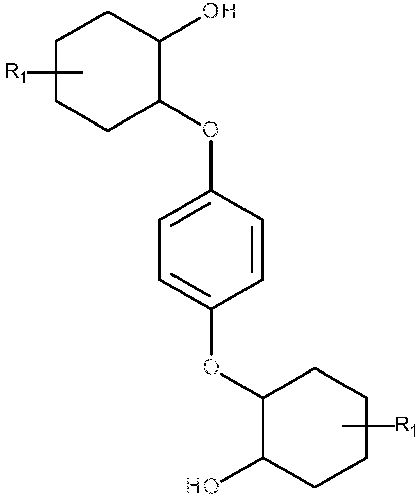

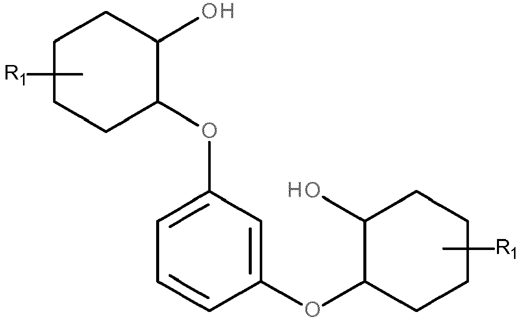

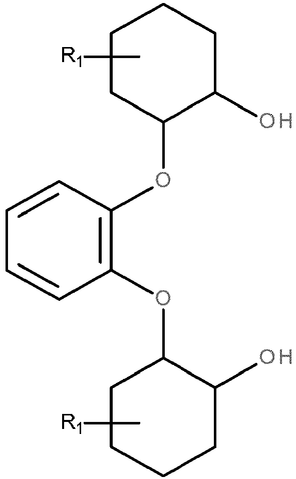

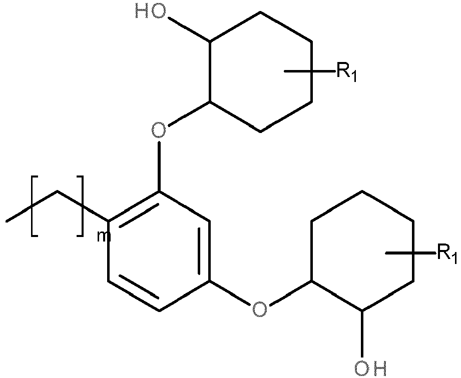

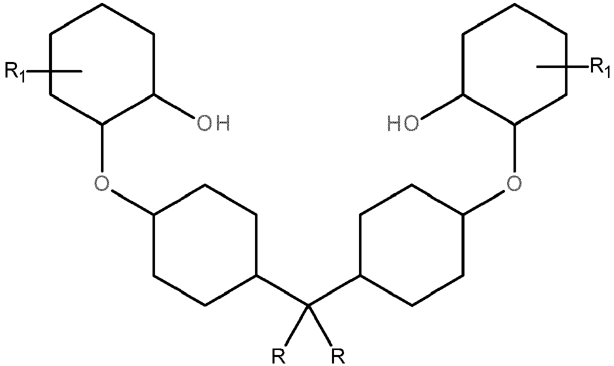

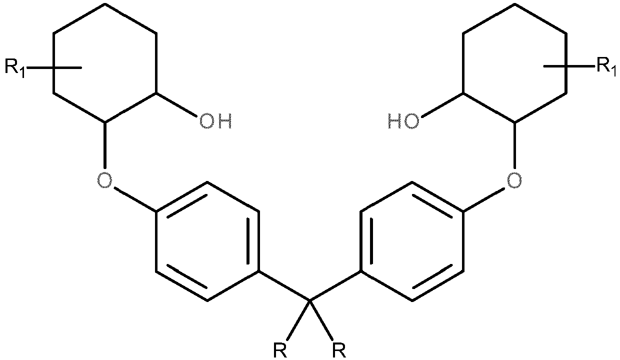

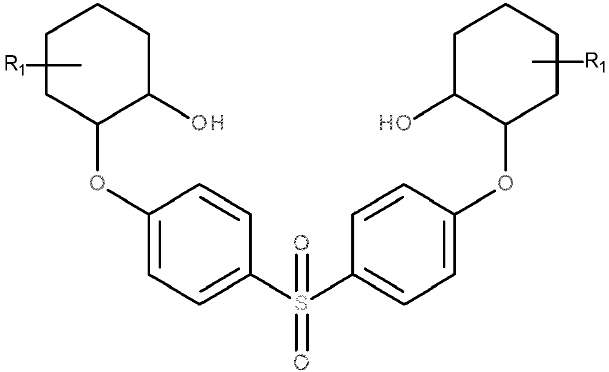

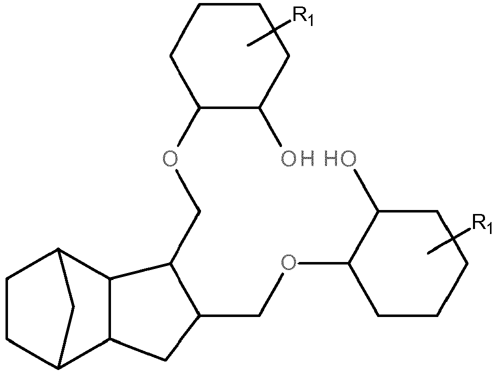

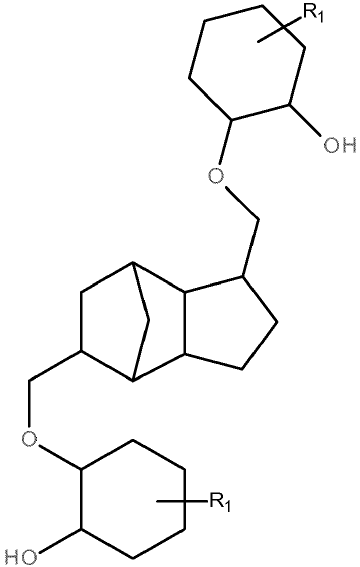

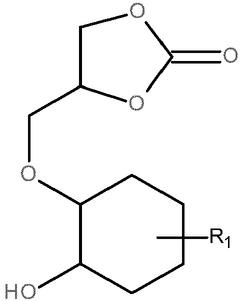

Der Bandkleber ist ein bei Raumtemperatur viskoser bis hochviskoser oder amorph erstarrter Stoff der beispielsweise in Abmischung mit einem oder mehreren bei Raumtemperatur festen oder flüssigen Beschleunigern in einem Gehalt von 50-99,5 Gew.-%, bevorzugt von 60-95 Gew.-%, insbesondere bevorzugt von 70-90 Gew.-% vorliegt.

Als Beschleuniger kann beispielsweise ein ionisch-wirkender Härtungskatalysator, z.B. eine organische und/oder anorganische Supersäure bzw. ein Supersäurensalz, ein Alkylimidazol und/oder ein Alkylimidazolderivat, Alkylpyrazol und/oder ein Alkylpyrazolderivat etc. eingesetzt werden.

Als Imprägniermittel wird bevorzugt ein anhydridfreies Imprägnierharz eingesetzt, beispielsweise umfasst das Imprägnierharz eine oder mehrere Verbindungen, ausgewählt aus der Gruppe folgender Verbindungen: undestillierter und/oder destillierter, ggf. reaktivverdünnter Bisphenol-A-Diglycidylether, undestillierter und/oder destillierter, ggf. reaktivverdünnter Bisphenol-F-Diglycidylether, hydrierter Bisphenol-A-Diglycidylether und/oder hydrierter Bisphenol-F-Diglycidylether, reiner und/oder mit Lösemitteln verdünnter Epoxy-Novolak und/oder Epoxy-Phenol-Novolak, cycloaliphatische Epoxidharze wie 3,4-epoxycyclohexylmethyl-3,4-epoxycyclohexyl-carboxylat z.B. CY179, ERL-4221; Celloxide 2021P, Bis(3,4-epoxycyclohexylmethyl)adipat, z.B. ERL-4299; Celloxide 2081, Vinylcyclohexendiepoxid, z.B. ERL-4206; Celloxide 2000, 2-(3,4-epoxycyclohexyl-5,5-spiro-3,4-epoxy)-cyclohexan-meta-dioxan z.B. ERL-4234; Hexahydrophthalsäurediglycidylester, z.B. CY184, EPalloy 5200; Tetrahydrophthalsäurediglycidylether z.B. CY192; glycidierte Aminoharze (N,N-Diglycidyl-para-glycidyloxyanilin z.B. MY0500, MY0510, N,N-Diglycidyl-meta-glycidyloxyanilin z.B. MY0600, MY0610, N,N,N',N'-Tetraglycidyl-4,4'-methylendianilin z.B. MY720, MY721, MY725, sowie beliebiger Mischungen der vorgenannten Verbindungen.

Zur Herstellung des Bandklebers wird ein Cyclohexenoxid, ein 4-Vinylcyclohexenoxid und/oder ein beliebiges anderes Cyclohexenderivat mit Rest **R1R1** am cycloaliphatischem Ring, mit einem Monoalkohol und/oder einem zweiwertigem und/oder mehreren, höheren, aliphatischen, cycloaliphatischen, aromatischen und/oder heterozyklischem Alkohol, Alkyl/Aryl-Alkoholderivat und/oder Ester und/oder Bisphenolen A(OH)n, wobei **A** = **(CxHy)** mit bevorzugt **x** = 1-30 und **y** = 1-100, ggf. durch Verwendung eines Katalysators K, d.h. **n** im Bereich von 1 bis 5000, bevorzugt 2-10, umgesetzt.

Durch die vorliegende Erfindung wird erstmals ein für herkömmliche Imprägnierverfahren geeigneter Bandkleber für ein Isolationssystem, festen Isolationswerkstoff wie Glimmer, ein anhydridfreies Imprägnierharz und einen Beschleuniger für das anhydridfreies Imprägnierharz umfassend, zur Verfügung gestellt, wobei der Bandkleber auf die Reaktivität eines Beschleunigers oder Härtungskatalysators eines anhydridfreien Imprägnierharzes in Bezug auf die Lagerstabilität des Gesamtsystems eingestellt ist.

## Patentansprüche

1. Bandkleber für ein Isolierband in einem Isolationssystem, eine dynamische Viskosität von 1 - 100 Pa*s bei Imprägniertemperatur aufweisend, der ein Additionsprodukt aus einem Bisphenol, Diol, Triol und/oder höherem Alkohol, nachfolgend als Segment "**A(OH)**ₙ" bezeichnet, mit Cyclohexenoxid und/oder einem Cyclohexenoxidderivat, nachfolgend als Segment "**Cy**" bezeichnet, umfasst, wobei der Bandkleber oxirangruppen-frei ist.

2. Bandkleber nach Anspruch 1, wobei **A(OH)**ₙ ausgewählt ist aus der Gruppe folgender Verbindungen:
- Mono-Ethylenglycol (C₂H₄)(OH)₂, Butandiole (C₄H₈)(OH)₂, Butendiole (C₄H₆)(OH)₂, Butindiol (C₄H₄)(OH)₂, Polyethylenglykole H(OC₂H₄)ₓ(OH)₂ mit x=1 bis 5000, Propylenglykol (C₃H₆)(OH)₂, Polypropylenglykole H(OC₃H₆)ₓ(OH)₂ mit x=1 bis 5000, Diethylenglykol (C₂H₈O)(OH)₂, Propandiole (C₃H₆)(OH)₂, Neopentylglycol (C₅H₁₀)(OH)₂, Cyclopentandiole (C₅H₈)(OH)₂, Cyclopentendiole (C₅H₆)(OH)₂, Glycerin (C₃H₅)(OH)₃, Pentandiole (C₅H₁₀)(OH)₂, Pentaerythritol (C₅H₈)(OH)₄, Hexandiole (C₆H₁₂)(OH)₂, Hexylenglykole (C₆H₁₂)(OH)₂, Heptandiole (C₇H₁₄)(OH)₂, Octandiole (C₈H₁₆)(OH)₂, Polycaprolactondiole, Polycaprolactontriole, Hydrochinon (C₆H₄)(OH)₂, Resorcinol (C₆H₄)(OH)₂, (Pyro)Catechol (C₆H₄)(OH)₂, Rucinol (C₁₀H₁₂)(OH)₂, Triethylenglycol (C₆H₁₂)(OH)₂
- vollaromatisches, teilhydriertes und/oder vollhydriertes Bisphenol-A (C₁₅H₁₄)(OH)₂, (C₁₅H₂₈)(OH)₂, Bisphenol-F (C₁₃H₁₀)(OH)₂, Bisphenol-S (C₁₂H₈O₂S)(OH)₂
- Tricyclodecandimethanol (C₁₂H₁₈)(OH)₂, Glycerincarbonat (C₄H₅)(OH)₁.

3. Bandkleber nach einem der vorstehenden Ansprüche, der eine oder mehrere der Verbindungen der folgenden Strukturen umfasst:

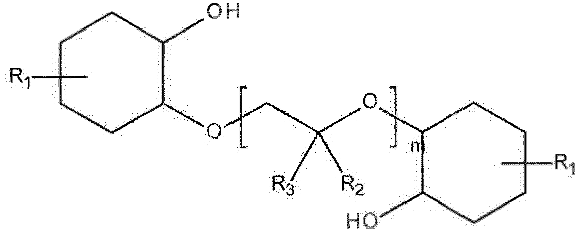

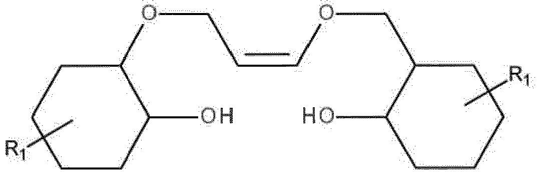

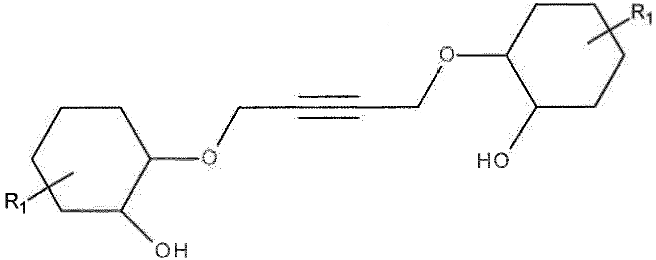

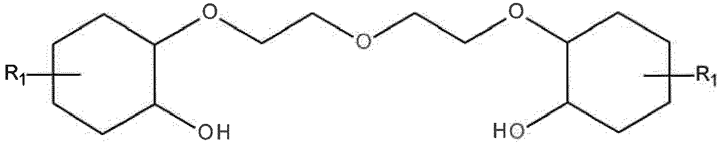

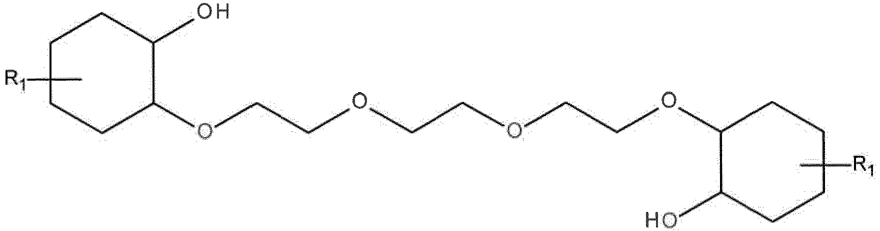

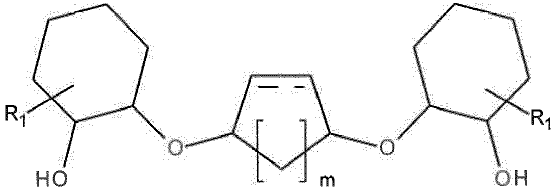

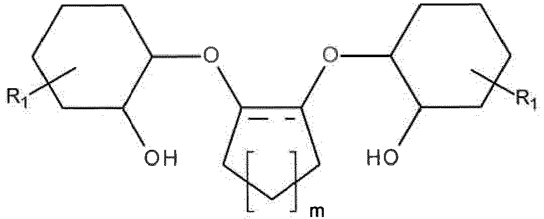

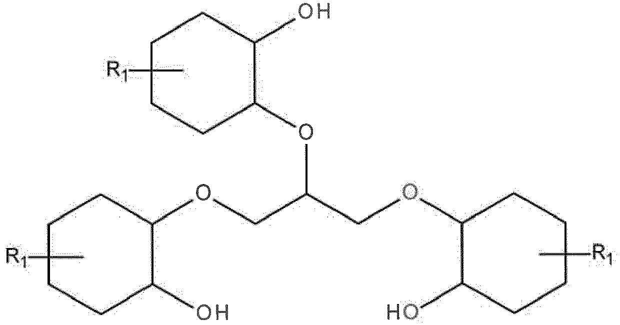

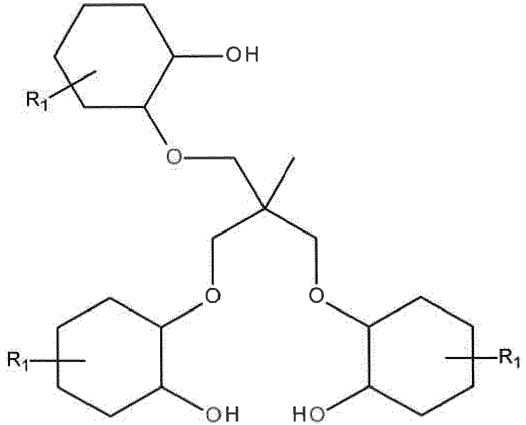

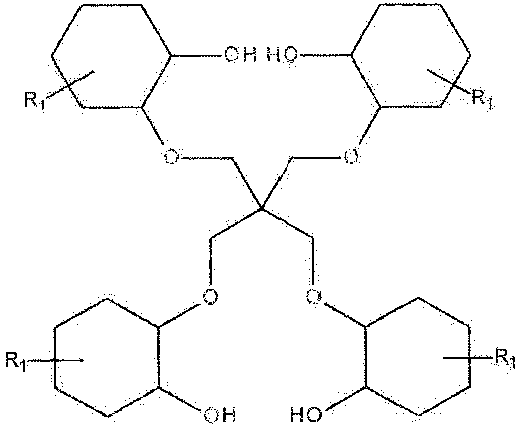

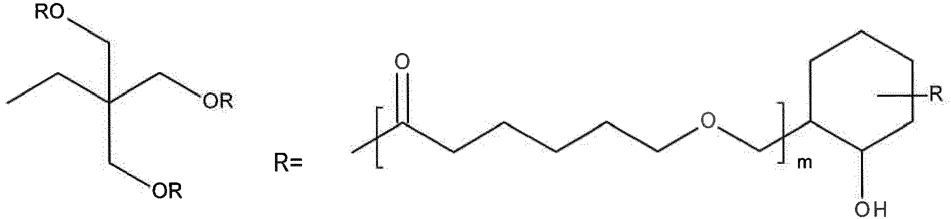

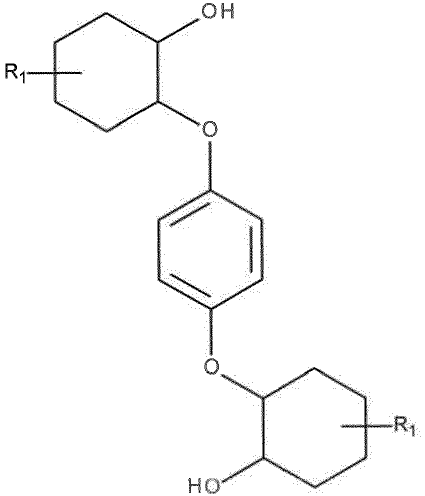

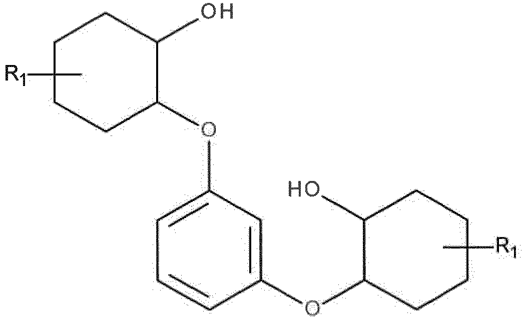

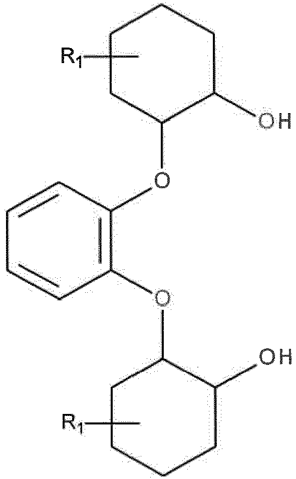

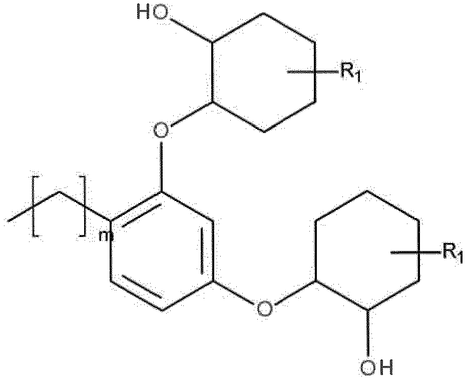

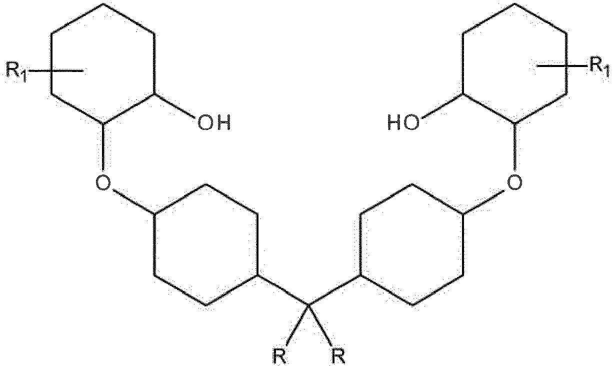

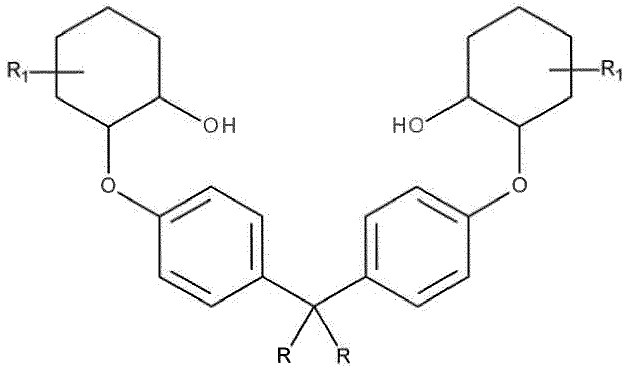

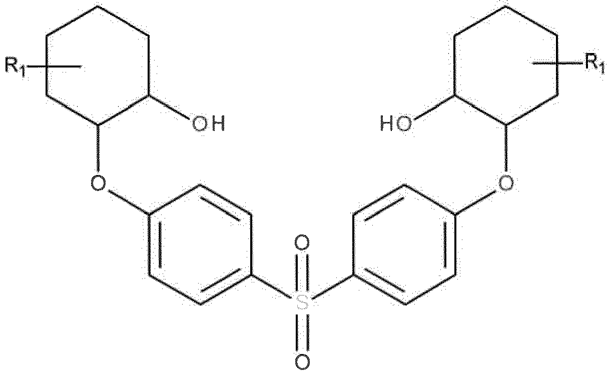

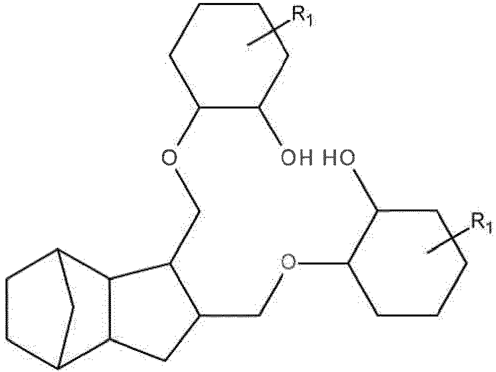

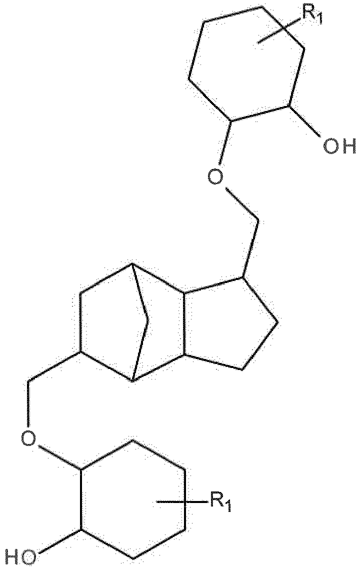

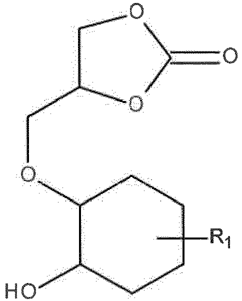

4. Isolationssystem, einen festen Isolationswerkstoff, ein anhydridfreies Imprägnierharz, einen Beschleuniger und einen Bandkleber nach einem der Ansprüche 1 bis 3 umfassend.

5. Isolationssystem nach Anspruch 4, wobei der Bandkleber nach einem der vorstehenden Ansprüche 1 bis 3 mit einem Beschleuniger in einer Abmischung in einem Gehalt von 50-99,5 Gew.-%, bevorzugt von 60-95 Gew.-%, insbesondere bevorzugt von 70-90 Gew.-% vorliegt.

6. Isolationssystem nach einem der Ansprüche 4 oder 5, wobei der Beschleuniger ausgewählt ist aus den Gruppen der folgenden Verbindungen: Hexafluoroantimonate, Tetrafluoroborate und Hexaflurorophosphate und/oder Sulphoniumderivate als Vertreter sog. Supersäuren bzw. Supersäuresalze, Alkylmethylimidazole, insbesondere des 1-Decyl-2-Methylimidazol, und/oder Dialkylpyrazole, insbesondere des 3,5-Dimethylpyrazol.

## Claims

1. Tape adhesive for an insulating tape in an insulation system, having a dynamic viscosity of 1-100 Pa*s at impregnation temperature, which comprises an addition product formed from a bisphenol, diol, triol and/or higher alcohol, referred to hereinafter as "**A(OH)ₙ**" segment, with cyclohexene oxide and/or a cyclohexene oxide derivative, referred to hereinafter as "Cy" segment, wherein the tape adhesive is free of oxirane groups.

2. Tape adhesive according to Claim 1, wherein **A(OH)ₙ** is selected from the group of the following compounds:
- monoethylene glycol (C₂H₄)(OH)₂, butanediols (C₄H₈)(OH)₂, butenediols (C₄H₆)(OH)₂, butynediol (C₄H₄)(OH)₂, polyethylene glycols H(OC₂H₄)ₓ(OH)₂ with x = 1 to 5000, propylene glycol (C₃H₆)(OH)₂, polypropylene glycols H(OC₃H₆)ₓ(OH)₂ with x = 1 to 5000, diethylene glycol (C₂H₈O)(OH)₂, propanediols (C₃H₆)(OH)₂, neopentyl glycol (C₅H₁₀)(OH)₂, cyclopentanediols (C₅H₈)(OH)₂, cyclopentenediols (C₅H₆)(OH)₂, glycerol (C₃H₅)(OH)₃, pentanediols (C₅H₁₀)(OH)₂, pentaerythritol (C₅H₈)(OH)₄, hexanediols (C₆H₁₂)(OH)₂, hexylene glycols (C₆H₁₂)(OH)₂, heptanediols (C₇H₁₄)(OH)₂, octanediols (C₈H₁₆)(OH)₂, polycaprolactonediols, polycaprolactonetriols, hydroquinone (C₆H₄)(OH)₂, resorcinol (C₆H₄)(OH)₂, (pyro) catechol (C₆H₄)(OH)₂, rucinol (C₁₀H₁₂)(OH)₂, triethylene glycol (C₆H₁₂)(OH)₂,
- fully aromatic, partly hydrogenated and/or fully hydrogenated bisphenol A (C₁₅H₁₄)(OH)₂, (C₁₅H₂₈)(OH)₂, bisphenol F(C₁₃H₁₀)(OH)₂, bisphenol S (C₁₂H₈O₂S)(OH)₂,
- tricyclodecanedimethanol (C₁₂H₁₈)(OH)₂, glycerol carbonate (C₄H₅)(OH)₁.

3. Tape adhesive according to either of the preceding claims, comprising one or more of the compounds of the following structures:

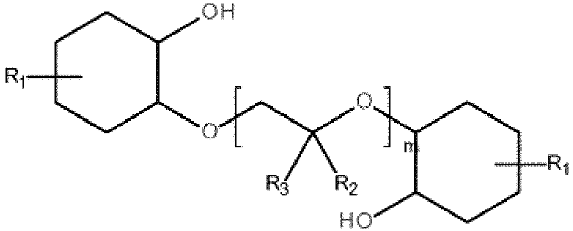

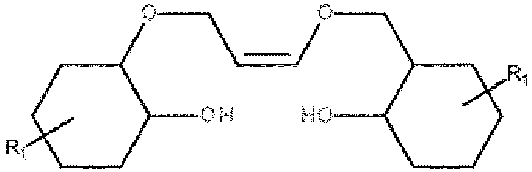

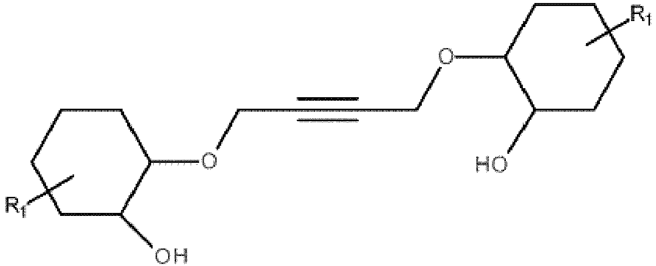

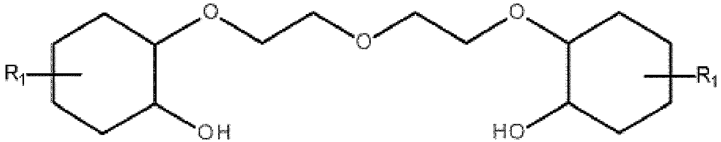

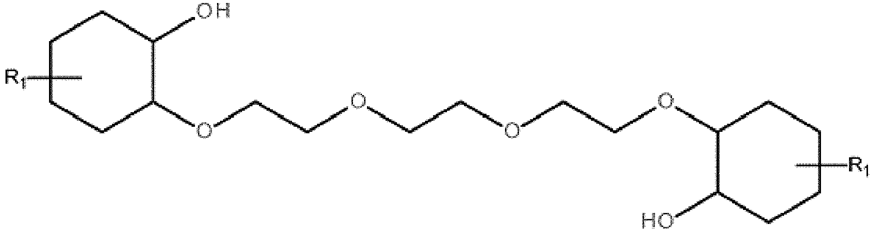

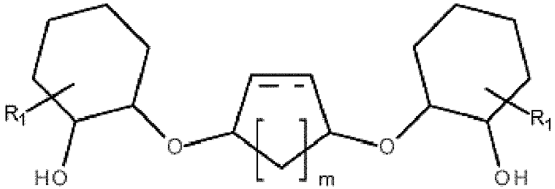

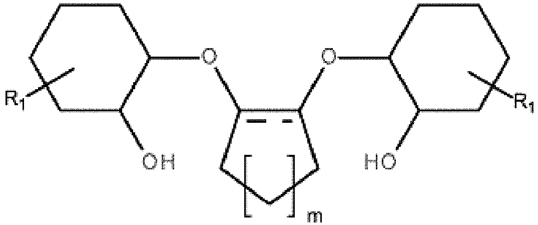

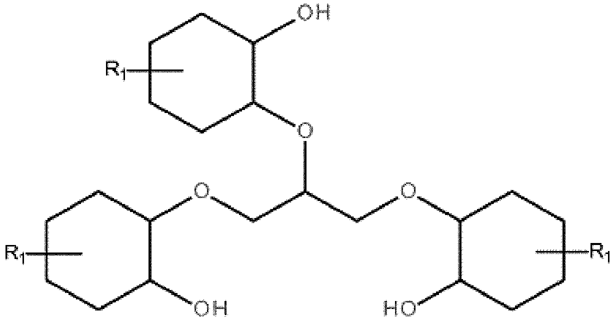

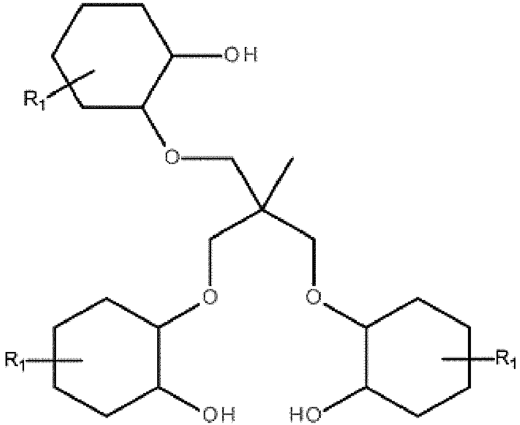

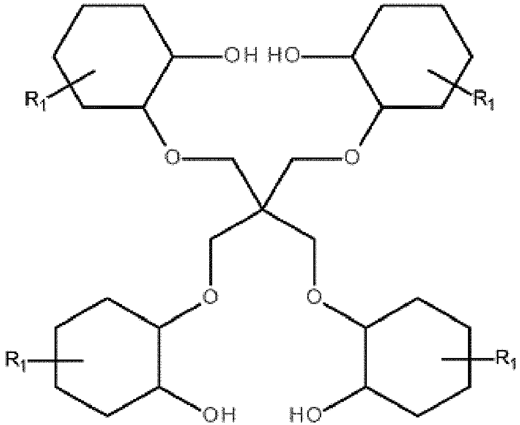

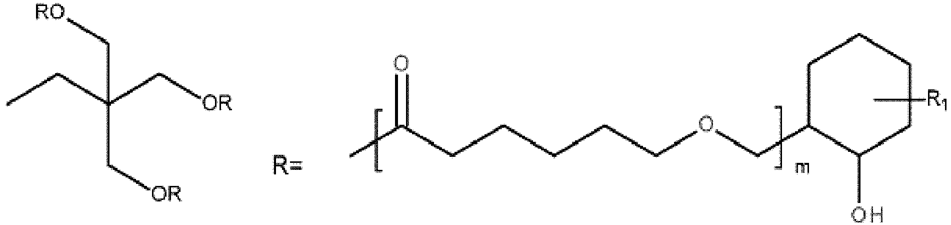

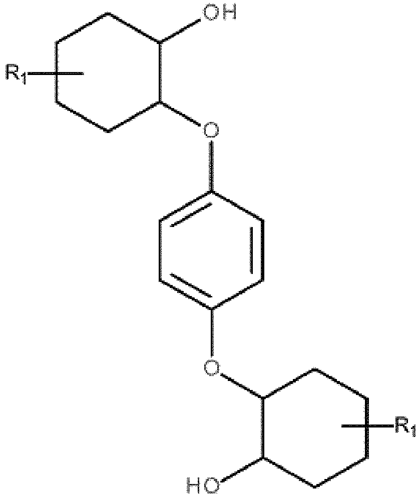

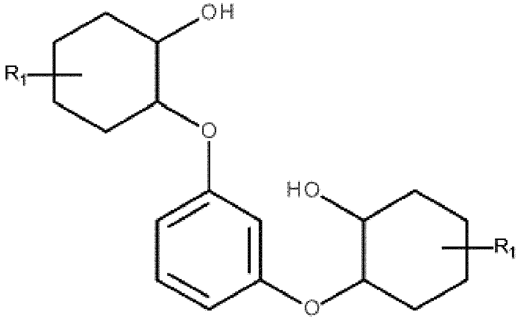

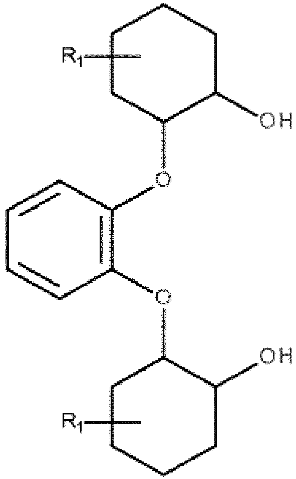

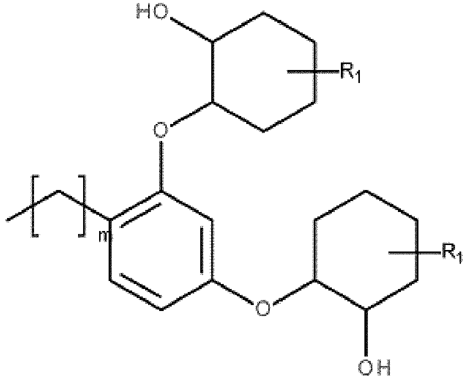

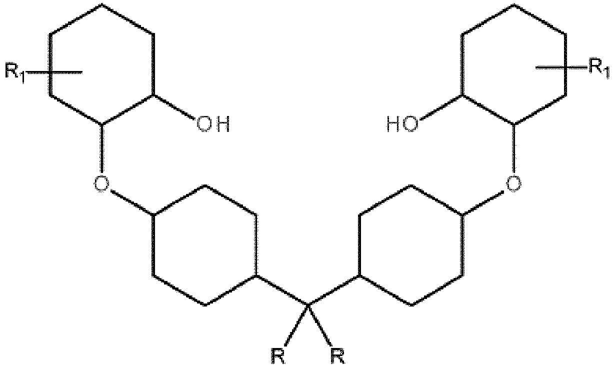

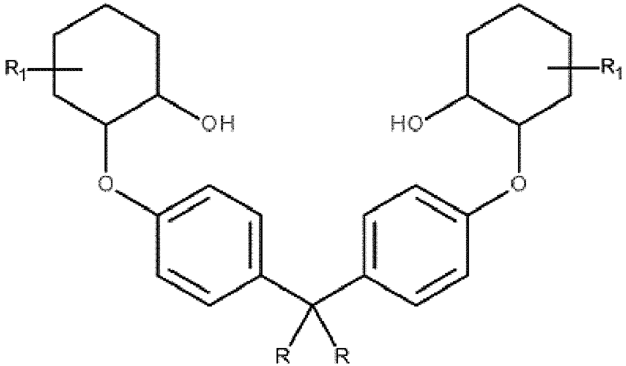

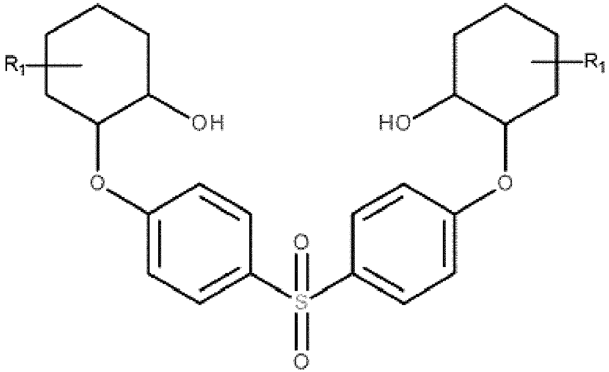

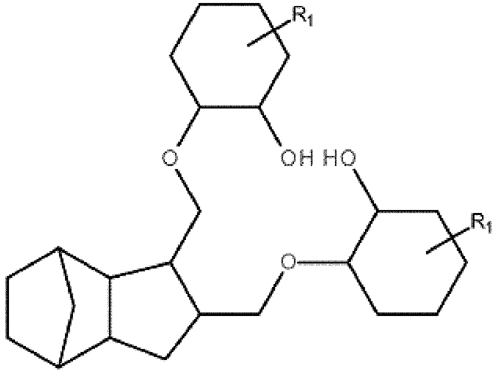

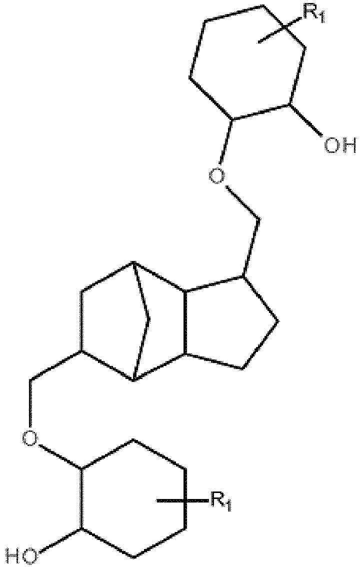

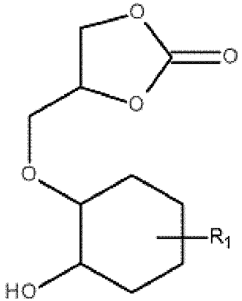

4. Insulation system comprising a solid insulation material, an anhydride-free impregnating resin, an accelerator and a tape adhesive according to any of Claims 1 to 3.

5. Insulation system according to Claim 4, wherein the tape adhesive according to any of the preceding Claims 1 to 3 is present together with an accelerator in a blend in a content of 50%-99.5% by weight, preferably of 60%-95% by weight, especially preferably of 70%-90% by weight.

6. Insulation system according to either of Claims 4 and 5, wherein the accelerator is selected from the groups of the following compounds: hexafluoroantimonates, tetrafluoroborates and hexafluorophosphates and/or sulfonium derivatives as representatives of what are called superacids or superacid salts, alkylmethylimidazoles, especially 1-decyl-2-methylimidazole, and/or dialkylpyrazoles, especially 3,5-dimethylpyrazole.

## Revendications

1. Ruban adhésif destiné à une bande isolante dans un système d'isolation, qui présente une viscosité dynamique de 1 à 100 Pa*s à la température d'imprégnation, qui comprend un produit d'addition d'un bisphénol, d'un diol, d'un triol et/ou d'un alcool supérieur, que l'on désigne ci-après par le segment « **A(OH)ₙ** », avec un oxyde de cyclohexène et/ou un dérivé d'oxyde de cyclohexène, que l'on désigne ci-après par le segment « Cy » ; dans lequel le ruban adhésif est exempt de groupes oxirane.

2. Ruban adhésif selon la revendication 1, dans lequel le segment **A(OH)ₙ** est choisi parmi le groupe des composés indiqués ci-après :
- du mono-éthylèneglycol (C₂H₄)(OH)₂, des butanediols (C₄H₈)(OH)₂, des butènediols (C₄H₆)(OH)₂, du butinediol (C₄H₄)(OH)₂, des polyéthylèneglycols H(OC₂H₄)ₓ(OH)₂ dans lesquels x = 1 à 5000, du propylèneglycol (C₃H₆)(OH)₂, des polypropylèneglycols H(OC₃Hₑ)ₓ(OH)₂ dans lesquels x = 1 à 5000, du diéthylèneglycol (C₂H₈O)(OH)₂, des propanediols (C₃H₆)(OH)₂, du néopentylglycol (C₅H₁₀)(OH)₂, des cyclopentanediols (C₅H₈)(OH)₂, des cyclopentènediols (C₅H₆)(OH)₂, du glycérol (C₃H₅)(OH)₃, des pentanediols (C₅H₁₀)(OH)₂, du pentaérythritol (C₅H₈)(OH)₄, des hexanediols (C₆H₁₂)(OH)₂, des hexylèneglycols (C₆H₁₂)(OH)₂, des heptanediols (C₇H₁₄)(OH)₂, des octanediols (C₈H₁₆)(OH)₂, des polycaprolactonediols, des polycaprolactonetriols, de l'hydroquinone (C₆H₄)(OH)₂, du résorcinol (C₆H₄)(OH)₂, du (pyro) catéchol (C₆H₄)(OH)₂, du rucinol (C₁₀H₁₂)(OH)₂, du triéthylèneglycol (C₆H₁₂)(OH)₂ ;
- du bisphénol-A complètement aromatique, partiellement hydraté et/ou complètement hydraté (C₁₅H₁₄)(OH)₂, (C₁₅H₂₈)(OH)₂, du bisphénol-F (C₁₃H₁₀)(OH)₂, du bisphénol-S (C₁₂H₈O₂S)(OH)₂ ;
- du tricyclodécanediméthanol (C₁₂H₁₈)(OH)₂, du carbonate de glycérol (C₄H₅)(OH)₁.

3. Ruban adhésif selon l'une quelconque des revendications précédentes, qui comprend un ou plusieurs des composés présentant les structures suivantes :

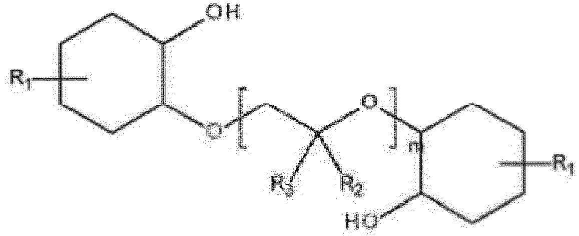

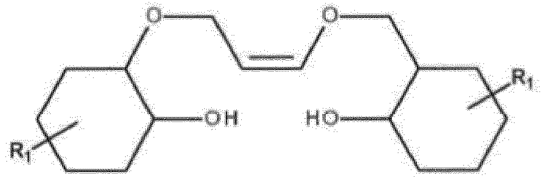

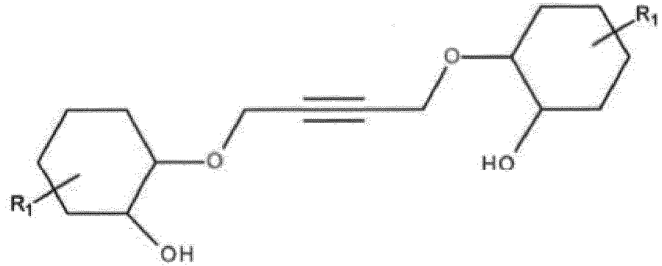

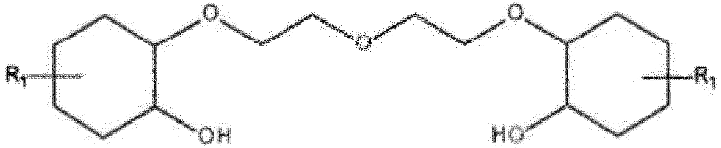

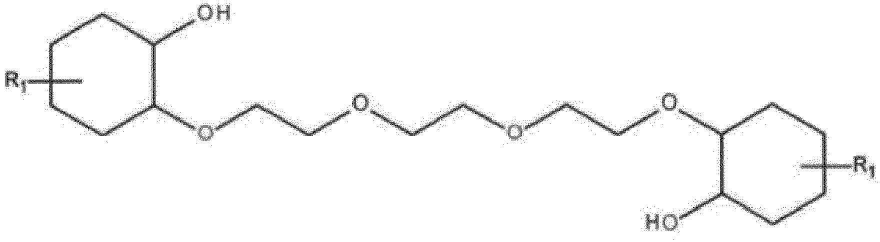

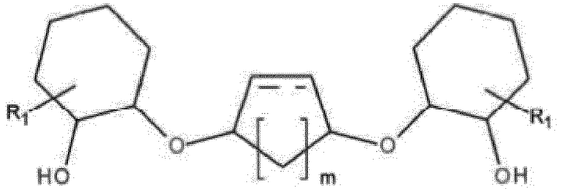

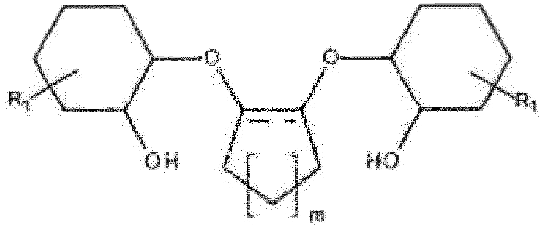

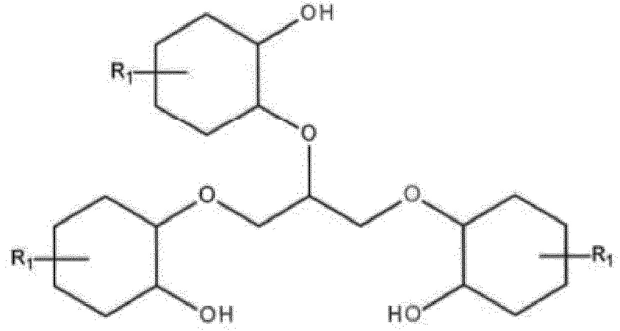

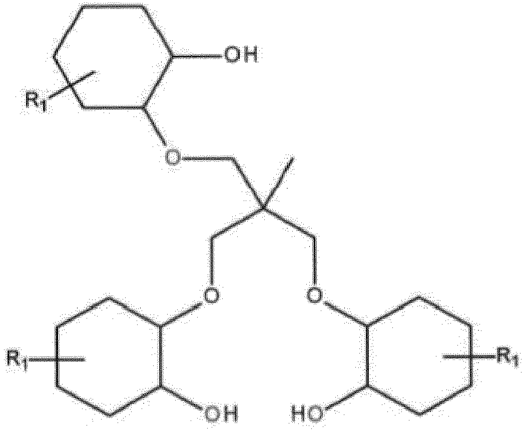

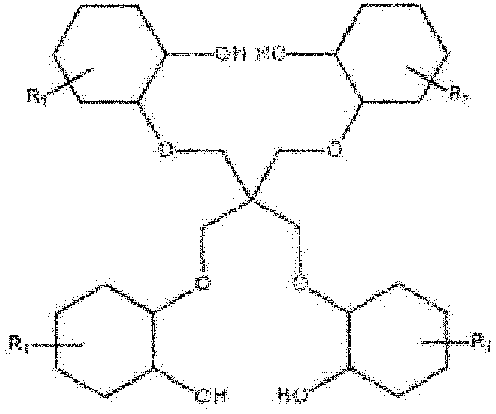

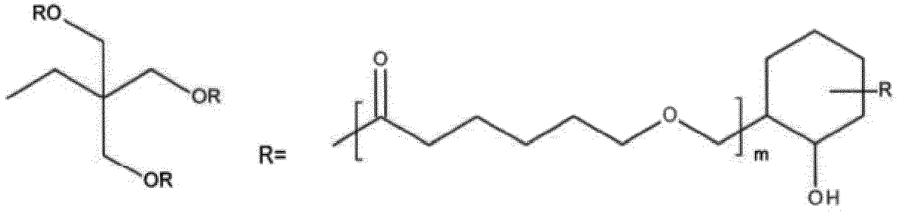

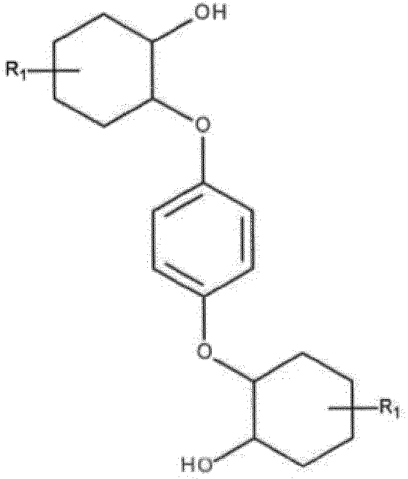

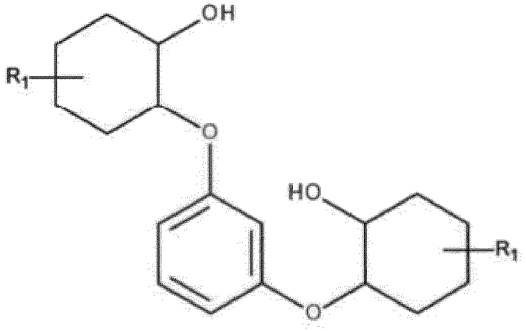

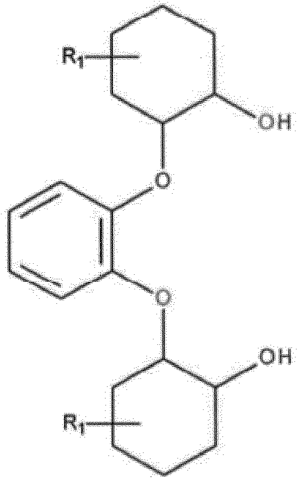

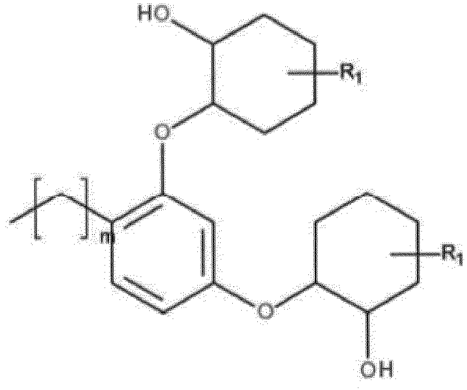

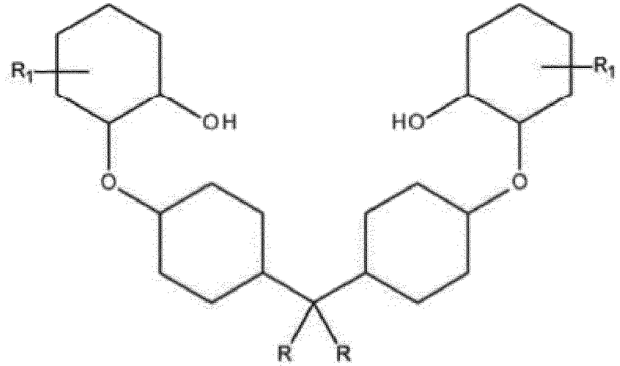

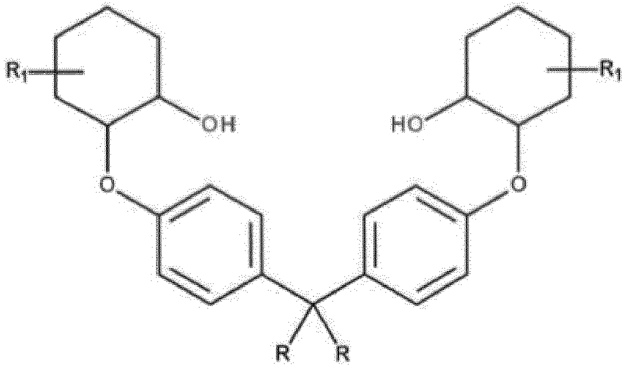

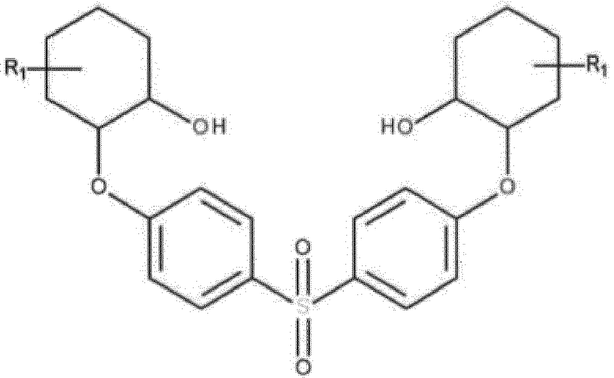

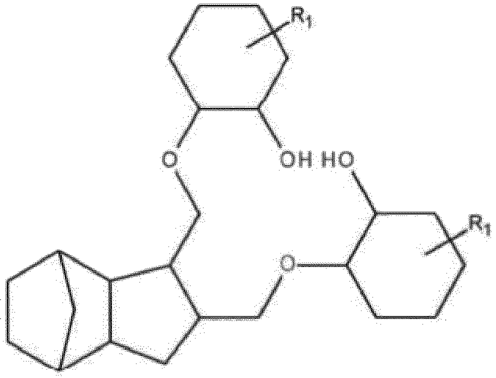

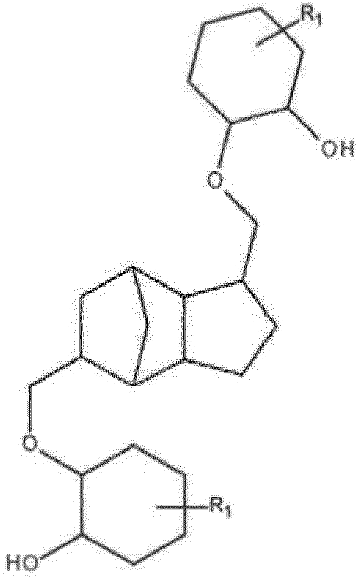

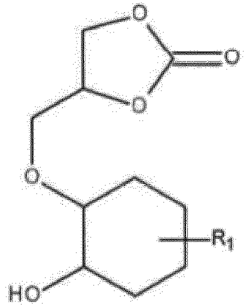

4. Système d'isolation qui comprend une matière première solide procurant une isolation, une résine d'imprégnation exempte d'anhydride, un accélérateur et un ruban adhésif selon l'une quelconque des revendications 1 à 3.

5. Système d'isolation selon la revendication 4, dans lequel le ruban adhésif selon l'une quelconque des revendications 1 à 3, est présent avec un accélérateur dans un mélange en une teneur de 50 à 99,5 % en poids, de préférence de 60 à 95 % en poids, d'une manière particulièrement préférée de 70 à 90 % en poids.

6. Système d'isolation selon l'une quelconque des revendications 4 ou 5, dans lequel l'accélérateur est choisi parmi les groupes des composés suivants, à savoir : des hexafluoroantimoniates, des tétrafluoroborates et des hexafluorophosphates et/ou des dérivés de sulfonium, à titre de représentant de ce qu'il est convenu d'appeler des superacides, respectivement des sels de superacides, des alkylméthylimidazoles, en particulier du 1-décyl-2-méthylimidazole, et/ou des dialkylpyrazoles, en particulier du 3,5-diméthylpyrazole.
